# FASCICULE DE BREVET EUROPEEN

(11) **EP 0 380 375 B1**
(45) Date de publication et mention de la délivrance du brevet: **22.06.1994**
(21) Numéro de dépôt: 90400001.5
(22) Date de dépôt: 02.01.1990
(51) Int. Cl.: C04B 35/56, C04B 35/80

(54) **Matériau composite à interphases multiples entre fibres de renfort réfractaires et matrice céramique**
Zusammengesetztes Material mit mehrfachen Zwischenphasen zwischen feuerfesten Verstärkungsfasern und keramischer Matrix
Composit material with multiples interphases between refractory reinforcing fibers and ceramic matrix

(30) Priorité: 13.01.1989 FR 8900401
(43) Date de publication de la demande: 01.08.1990
(73) Titulaire: SOCIETE EUROPEENNE DE PROPULSION, 92150 Suresnes (FR)
(72) Inventeur: Cotteret Jacques, F-33160 St Médard en Jalles (FR); Rocher Jean-Philippe, F-33160 St Médard en Jalles (FR); Héraud Louis, F-33200 Bordeaux (FR); Thébault Jacques, F-33200 Bordeaux (FR); Naslain Roger, F-33600 Pessac (FR)
(74) Mandataire: Joly, Jean-Jacques

(56) Documents cités:
- EP-A- 0 127 491
- EP-A- 0 172 082
- FR-A- 2 602 505
- GB-A- 2 080 781

## Description

La présente invention concerne un matériau composite à texture de renfort en fibres réfractaires et matrice céramique avec interphases multiples entre les fibres de la texture et la matrice.

Par fibres réfractaires, on entend ici les fibres en carbone ou les fibres en céramique comme, par exemple les fibres constituées essentiellement de carbure de silicium.

Dans les matériaux composites à fibres réfractaires et matrice céramique, la liaison fibre-matrice conditionne le transfert de charge et, par suite, les caractéristiques ainsi que le comportement mécanique des matériaux.

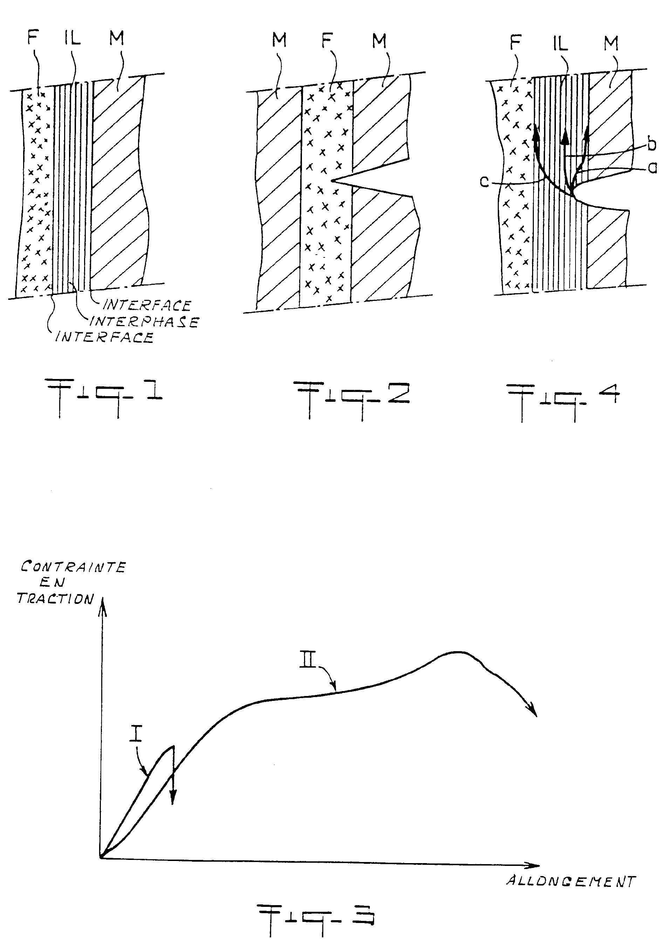

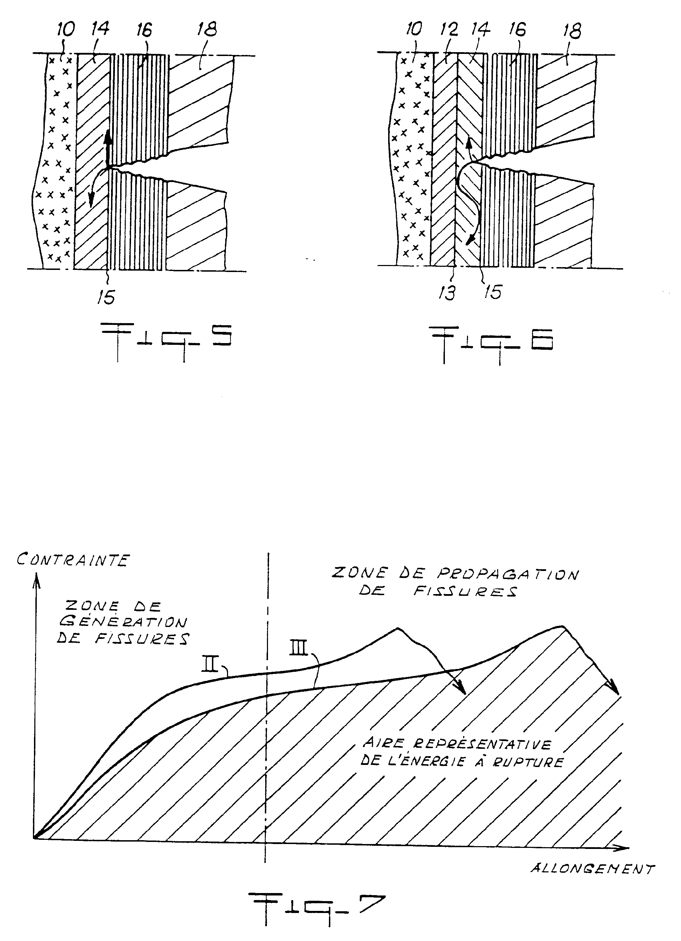

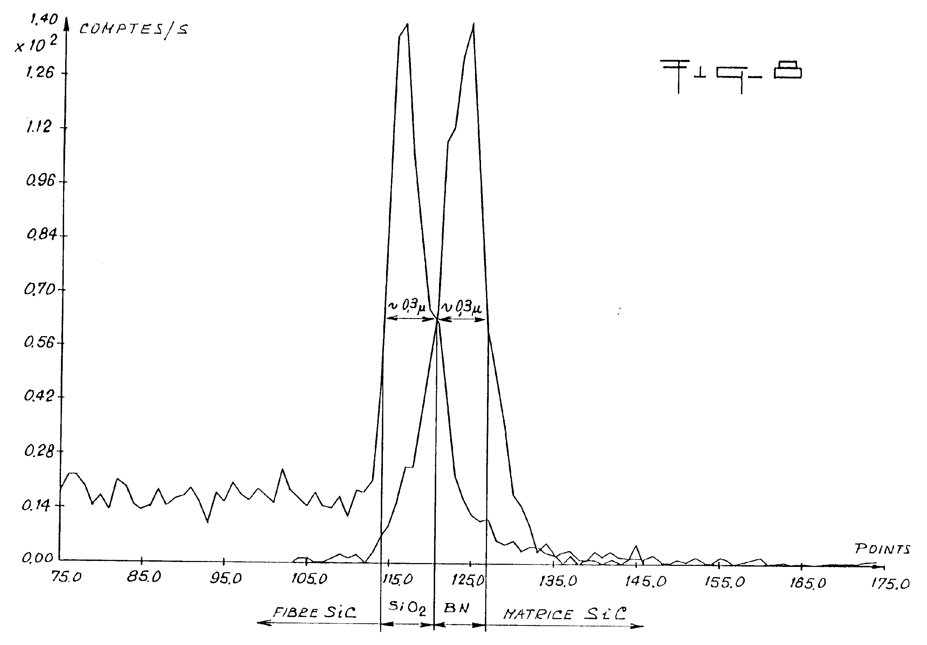

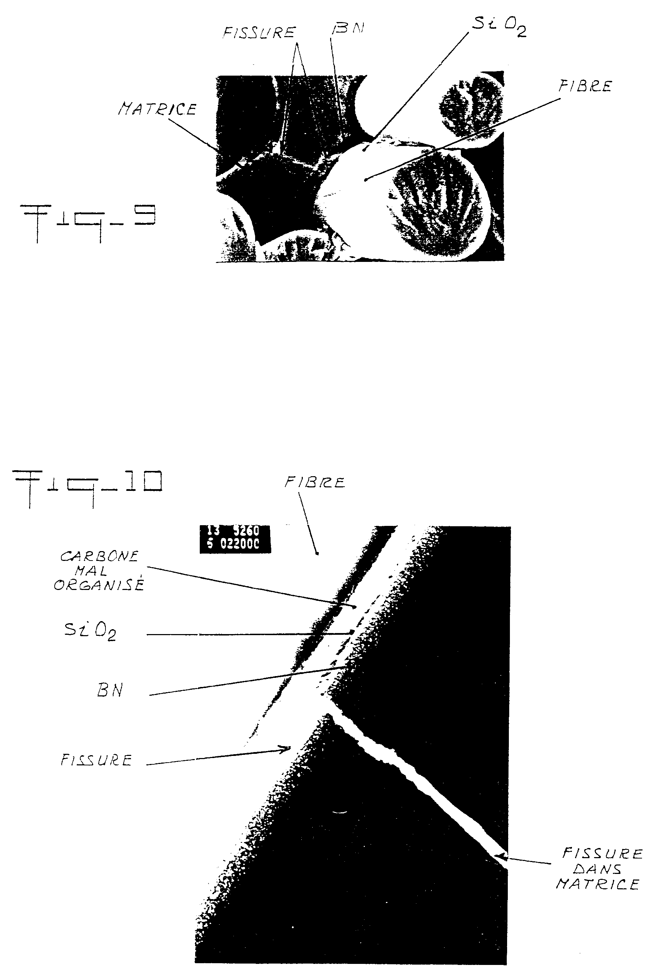

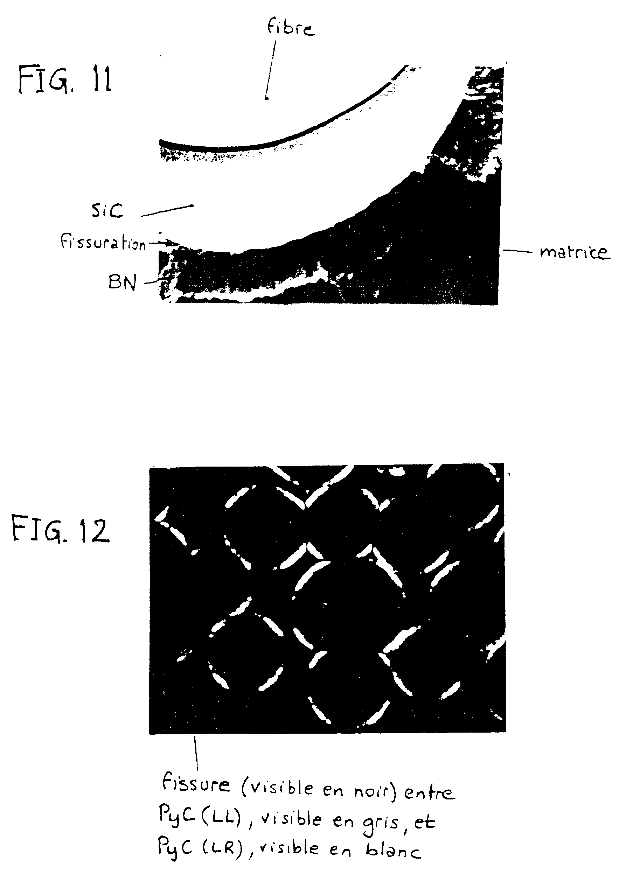

Un moyen avantageux pour contrôler le transfert de charge entre fibre et matrice consiste à interposer une fine couche d'un matériau à structure lamellaire orientée parallèlement à l'axe de la fibre, comme décrit dans le brevet français No 84 11 592 (publié sous le No 2 567 874). La couche à structure lamellaire est en un matériau choisi parmi le pyrocarbone laminaire rugueux PyC (LR), et le nitrure de bore (BN). Comme montré schématiquement par la figure 1, la couche à structre lamellaire constitue une interphase IL qui délimite deux interfaces : une interface entre fibre F et l'interphase lamellaire IL et une interface entre cette dernière et la matrice M.

En l'absence de l'interphase lamellaire, une fissure venant de la matrice M se propage directement dans la fibre F (figure 2), ce qui conduit à une rupture prématurée de celle-ci. Le matériau a un comportement fragile.

Par contre, l'interphase lamellaire, lorsqu'elle est présente, évite qu'une fissure venant de la matrice se propage directement dans la fibre. En raison de son caractère élastique en cisaillement, l'interphase lamellaire permet la relaxation des contraintes à fond de fissure. Le matériau a un comportement non fragile et des propriétés mécaniques améliorées, comme le montre la courbe II de la figure 3 qui représente la relation entre allongement et contrainte en traction. A titre de comparaison, la courbe I de la figure 3 montre cette relation dans le cas d'un matériau dépourvu d'interphase lamellaire.

La fissure reste arrêtée dans l'interphase lamellaire tant que le niveau de contrainte à fond de fissure ne dépasse pas la résistance à rupture du plus faible des éléments présents au voisinage immédiat de la fissure. Trois éléments sont à prendre en compte : le matériau constitutif de l'interphase lamellaire, l'interface matrice-interphase lamellaire et l'interface fibre-interphase lamellaire. Selon celui de ces éléments dont la résistance à rupture est la plus faible, le cheminement de la fissure se fera suivant le trajet a, b, ou c, respectivement, lorsque la contrainte à fond de fissure augmente (figure 4).

Le cheminement le plus dangereux est celui selon le trajet c, c'est-à-dire à l'interface fibre-interphase lamellaire. En effet, la fissure peut alors entrer dans la fibre, et la rompre, si elle rencontre le moindre défaut de surface de la fibre. Il en résulte alors un abaissement des caractéristiques mécaniques du matériau composite.

Aussi, la présente invention a-t-elle pour but de fournir un matériau composite à interphase lamellaire dans lequel un cheminement d'une fissure tel qu'elle rencontre et pénètre dans une fibre est évité.

Ce but est atteint, conformément à l'invention, du fait qu'au moins une couche formant interphase de contrôle est située entre la surface des fibres et l'interphase lamellaire de manière à définir, pour des fissures propagées à travers la matrice et l'interphase lamellaire, une zone de cheminement préférentiel hors du contact direct avec les fibres-mêmes.

Le matériau constitutif de l'interphase de contrôle est choisi parmi soit des matériaux ayant une contrainte et/ou un allongement à rupture inférieurs à ceux des fibres soit des matériaux dont l'adhérence à l'interphase lamellaire est suffisamment faible pour que la résistance à rupture de l'interface entre interphase de contrôle et interphase lamellaire soit inférieure à celle de l'interphase de contrôle. Le matériau de l'interphase de contrôle est par exemple un verre (notamment la silice), une céramique ou un pyrocarbone à faible activité optique. Lorsque le niveau de contrainte devient suffisamment élevé, la fissure qui a traversé l'interphase lamellaire est déviée et confinée dans l'interphase de contrôle ou à l'interface entre celle-ci et l'interphase lamellaire.

Une couche supplémentaire formant interphase de confinement peut être située entre les fibres et l'interphase de contrôle afin de parfaire le confinement d'une zone de cheminement préférentiel de fissure entre l'interphase de confinement et l'interphase de contrôle.

Le matériau constitutif de l'interphase de confinement est choisi parmi soit des matériaux ayant une contrainte et un allongement à rupture intermédiaires entre ceux des fibres et ceux du matériau constitutif de l'interphase de contrôle, soit des matériaux dont l'adhérence à l'interphase de contrôle est suffisamment faible pour que la résistance à rupture de l'interface entre interphase de confinement et interphase de contrôle soit inférieure à celle de l'interphase de confinement. L'interphase de confinement est par exemple en carbone mal organisé.

La présence de l'interphase de contrôle permet aux fibres de conserver leur intégrité pour des contraintes mécaniques croissantes, ce qui confère au matériau conforme à l'invention des caractéristiques mécaniques améliorées. En outre, le chemin de fissuration est allongé, ce qui augmente la résilience du matériau. Cette augmentation de la résilience, donc de la résistance au choc se traduit par une prolongation de la courbe II de la figure 3 du côté des allongements élevés avec augmentation de l'aire sous cette couche qui représente l'énergie à rupture.

Différents exemples de matériaux conformes à l'invention sont donnés dans la description faite ci-après à titre indicatif mais non limitatif.

On se référera aux dessins joints sur lesquels :
- les figures 1 à 4, déjà décrites, se rapportent à des matériaux de l'art antérieur,
- les figures 5 et 6 illustrent très schématiquement le confinement de la zone de propagation de fissure dans des matériaux suivant deux modes de réalisation de l'invention,
- la figure 7 montre des courbes qui illustrent de façon typique la relation entre allongement et contrainte en traction pour un matériau conforme à l'invention et pour un matériau de l'art antérieur,
- les figures 8 et 9 montrent respectivement, pour un premier exemple d'un matériau selon l'invention, des courbes illustrant le résultat d'une analyse de structure de la liaison fibre-matrice, et une reproduction d'un cliché de faciès de rupture obtenu par microscopie électronique,
- les figures 10 et 11 sont des reproductions de clichés obtenus par microscopie électronique montrant des faciès de rupture pour deux autres exemples de matériaux selon l'invention,
- les figures 12 et 13 montrent respectivement, pour un autre exemple d'un matériau selon l'invention, une reproduction d'un cliché de liaison fibre-matrice obtenu par microscopie optique et une reproduction d'un cliché de faciès de rupture obtenu par microscopie électronique, et
- les figures 14 et 15 montrent des reproductions de clichés de faciès de rupture obtenus par microscopie électronique pour encore un autre exemple d'un matériau selon l'invention et pour un matériau non conforme à l'invention.

La figure 5 illustre de façon très schématique la liaison fibre-matrice dans un mode de réalisation d'un matériau selon l'invention. Cette liaison est constituée par une couche 14 en contact avec la surface de la fibre réfractaire 10 et une couche 16 interposée entre la couche 14 et la matrice céramique 18, et en contact avec celles-ci.

La couche 16, ci-après dénommée interphase lamellaire, est, de façon connue en soi, constituée par un matériau à structure lamellaire tel que, notamment, le pyrocarbone de type laminaire rugueux, ci-après désigné par PyC (LR) ou un autre carbone bien organisé en feuillets, ou le niture de bore (BN). Le matériau lamellaire est orienté parallèlement à l'axe de la fibre 10. L'épaisseur de l'interphase lamellaire 16 est comprise par exemple entre 0,05 et 3 microns.

La couche 14, ci-après dénommée interphase de contrôle a pour fonction de confiner dans une zone hors du contact avec la fibre 10 le cheminement d'une fissure ayant traversé la matrice 18 et l'interphase lamellaire 16. Comme le montre la figure 5, la fissure est alors déviée et confinée dans l'interphase de contrôle ou à l'interface 15 entre celle-ci et l'interphase lamellaire.

A cet effet, le matériau constitutif de l'interphase de contrôle est choisi parmi :
- des matériaux ayant une contrainte à rupture en traction et/ou un allongement à rupture inférieurs à ceux de la fibre ; le matériau de l'interphase de contrôle présente alors une adhérence à la fibre suffisamment élevée pour que la résistance à rupture de l'interface fibre-interphase de contrôle soit supérieure à celle de l'interphase de contrôle, afin d'éviter un cheminement de fissure à cette interface, ou
- des matériaux ayant une adhérence à l'interphase lamellaire suffisamment faible pour que la résistance à rupture de l'interface entre interphase de contrôle et interphase lamellaire soit inférieure à celle de l'interphase de contrôle.

La figure 6 illustre de façon très schématique la liaison fibre-matrice dans un autre mode de réalisation d'un matériau selon l'invention. Cet autre mode de réalisation diffère de celui illustré par la figure 5 uniquement par l'interposition d'une couche 12, ci-après dénommée interphase de confinement, entre la fibre 10 et l'interphase de contrôle. L'interphase de confinement a pour fonction d'assurer que la zone de cheminement préférentiel d'une fissure ayant traversé la matrice 18 et l'interphase lamellaire reste confinée entre l'interphase de confinement et l'interphase lamellaire 16. Comme le montre la figure 6, la propagation de la fissure se fait au sein de l'interphase de contrôle et éventuellement, aux interfaces 13 et 15 entre celle-ci et les interphases de confinement et lamellaire.

A cet effet, le matériau constitutif de l'interphase de confinement est choisi parmi :
- des matériaux ayant une contrainte à rupture en traction et un allongement à rupture intermédiaires entre ceux, supérieurs, de la fibre et ceux, inférieurs, du matériau de la couche de contrôle, ou
- des matériaux ayant une adhérence à l'interphase de contrôle suffisamment faible pour que la résistance à rupture de l'interface entre interphase de confinement et interphase de contrôle soit inférieure à celle de l'interphase de confinement.

Une caractéristique essentielle de l'invention consiste donc dans le confinement du cheminement préférentiel des fissures hors du contact direct avec les fibres-mêmes, telles qu'elles subsistent dans le matériau composite, c'est-à-dire les fibres d'origine utilisées pour le renfort lorsqu'elles n'ont subi aucune modification lors de la densification par la matrice ou de traitements éventuels appliqués au renfort ou au matériau composite, ou la partie centrale restée sensiblement intacte des fibres lorsque des modifications de structure ou de composition se sont produites dans des couches superficielles des fibres lors de la densification ou de traitements éventuels.

Par cette caractéristique, le matériau composite selon l'invention est fondamentalement différent des matériaux connus dans lesquels chaque fibre est munie d'une gaine faiblement liée à la fibre pour provoquer de façon préférentielle une décohésion entre la fibre et la gaine qui l'entoure sous l'effet de contraintes exercées sur le matériau.

Dans les modes de réalisation des figures 5 et 6, la présence de l'interphase de contrôle 14, même limitée à quelques couches atomiques, est suffisante pour que sa fonction soit assurée. C'est pourquoi l'épaisseur de la couche de contrôle est de préférence inférieure à 1 micron, même inférieure à 0,5 micron. Il en est de même pour l'interphase de confinement 12 dans le mode de réalisation de la figure 6.

L'amélioration de la tenue aux chocs des matériaux conformes à l'invention par rapport aux matériaux de l'art antérieur est illustrée par la figure 7.

Sur cette figure, la courbe II, identique à celle de la figure 3, représente de façon typique la relation entre contrainte en traction et allongement pour un matériau de l'art antérieur ayant seulement une interphase lamellaire entre fibre et matrice tandis que la courbe III représente de façon typique la relation entre contrainte en traction et allongement pour un matériau conforme à l'invention avec interphase de contrôle et interphase lamellaire entre fibre et matrice. Dans une première zone dite de génération de fissures (début de sollicitation en traction), les comportements des deux matériaux sont sensiblement les mêmes. Par contre, dans la zone suivante dite de propagation des fissures, l'amélioration apportée par l'invention se traduit par une prolongation de la courbe du côté des allongements élevés, avant sa retombée progressive. De la sorte et même dans le cas envisagé où l'invention n'apporte pas d'augmentation substantielle de la résistance à rupture en traction (ce qui n'est pas toujours vrai comme le montreront les exemples qui suivent), l'augmentation de l'aire de la surface située sous la courbe III, par rapport à celle située sous la courbe II traduit une augmentation correspondante de l'énergie à rupture, donc de la résistance au choc.

Différents exemples de réalisation de matériaux conformes à l'invention et d'autres matériaux utilisés à titre comparatif seront maintenant décrits.

### Exemple 1

Un tissu formé de fibres essentiellement en carbure de silicium (ci-après dénommées fibres SiC) est placé dans une atmosphère de tétraéthoxysilane (TEOS) et d'azote sous une pression de 10 torr (1,33.10³ N/m²) et l'ensemble est chauffé à 750 degrés C pendant 2 heures. A l'issue de ce traitement, une couche uniforme de silice (SiO₂) s'est déposée sur les fibres en formant une gaine régulière de SiO₂ d'épaisseur 0,3 micron sur chaque fibre SiC élémentaire. Des strates de tissu ainsi traité sont empilées et placées dans un outillage de façon à obtenir un taux de fibres de 40 % (fraction effectivement occupée par les fibres dans le volume apparent de l'empilement des strates de tissu).

Les strates de tissu traité maintenues dans l'outillage sont placées dans un four dans lequel chaque fibre déjà gainée de SiO₂ est enrobée par une couche homogène de nitrure de bore (BN) d'épaisseur égale à 0,3 micron. Le nitrure de bore est déposé en phase vapeur à partir d'un mélange de trifluorure de bore (BF₃) et d'ammoniac sous une pression de 10 torr (1,33.10³ N/m²) à une température de 950 degrés C.

Après formation de la couche de BN, les strates de tissu, toujours maintenues dans l'outillage, sont placées dans un four d'infiltration en phase gazeuse pour être densifiées par une matrice en carbure de silicium (SiC). Un procédé d'infiltration en phase gazeuse de SiC est décrit dans le brevet français No 77 26 979 (publié sous le No 2 401 888).

Un matériau composite conforme à l'invention est alors obtenu, constitué par : un renfort en fibres SiC, une interphase SiO₂, une interphase BN et une matrice SiC. L'interphase BN constitue l'interphase lamellaire telle que décrite dans le brevet français précité No 84 11 591. L'interphase SiO₂ constitue l'interphase de contrôle ayant un comportement plus fragile que les fibres SiC.

Ce matériau a été caractérisé par un essai en traction à température ambiante. Les propriétés suivantes ont été mesurées.
- résistance en traction à rupture (R_{T}) : 260 MPa
- module d'élasticité apparent (E) : 220 GPa
- allongement à rupture (ε_{R}) : 0,78 %

La séquence SiO₂-BN à la liaison fibre-matrice a été visualisée par analyse SIMS (Spectromètrie de Masse d'Ions Secondaires). Sur la figure 8, les pics caractérisant la présence de l'interphase SiO₂ et de l'interphase BN sont particulièrement marqués.

La figure 9 reproduit un cliché d'un faciès de rupture du matériau obtenu par microscopie électronique à balayage. On constate que la rupture du matériau est localisée à l'interface entre interphase de contrôle (SiO₂) et interphase lamellaire (BN). L'interphase SiO₂ remplit donc effectivement sa fonction de localisation de la zone de propagation des fissures hors du contact direct avec la fibre.

### Exemple 2

A titre comparatif, il est procédé comme dans l'exemple 1 à l'exception de la formation de l'interphase SiO₂. Les caractéristiques en traction à température ambiante du matériau renfort SiC/interphase BN/matrice SiC ainsi obtenu sont les suivantes :
- R_{T}: = 180 MPa
- E: = 250 GPa
- ε_{R}: = 0,30 %.

La comparaison entre l'exemple 1 et l'exemple 2 montre l'amélioration des propriétés mécaniques du matériau apportée par la présence de l'interphase de contrôle SiO₂, amélioration due à la canalisation des fissures lors de la rupture. Cette amélioration est notamment sensible en ce qui concerne l'allongement à rupture, ce qui signifie une énergie à rupture et une tenue au choc augmentées.

### Exemple 3

Un tissu SiC est placé en atmosphère oxydante à une température de 800 degrés C pour former à la surface de chaque fibre une couche sensiblement uniforme de SiO₂ d'épaisseur égale à environ 0,08 micron.

Des strates de tissu SiC ainsi oxydé sont empilées et placées dans un outillage, et il est procédé à un dépôt d'une interphase lamellaire BN et à une infiltration en phase gazeuse d'une matrice SiC comme dans l'exemple 1.

La caractérisation par essai en traction à température ambiante du matériau obtenu donne des résultats identiques à ceux de l'exemple 1.

### Exemple 4

Un tissu en fibres SiC commercialisées (par la société japonaise Nippon Carbon sous la désignation "Nicalon" est soumis à un traitement thermique à 1050 degrés C sous azote à une pression de 0,1 torr (13,33 N/m²). Par suite d'une décomposition partielle de la fibre, il se forme une couche de SiO₂ à la périphérie de cette dernière. Entre la couche de SiO₂ et la fibre SiC restée intacte, on constate la présence d'une fine couche de carbone mal organisé d'épaisseur inférieure à 0,03 micron.

Des strates de tissu SiC ainsi traité sont empilées et placées dans un outillage, et il est procédé à un dépôt d'une interphase lamellaire BN et à une infiltration en phase gazeuse d'une matrice SiC comme dans l'exemple 1.

La caractérisation du matériau obtenu, par essai en traction à température ambiante, donne les résultats suivants :
- R_{T}: = 200 MPa
- E: = 240 GPa
- ε_{R}: = 0,6 %.

La séquence constituée par la couche de carbone mal organisée, formant interphase de confinement, la couche de SiO₂, formant interphase de contrôle et l'interphase lamellaire BN, entre la fibre et la matrice, a été visualisée au microscope électronique à transmission comme montré par la figure 10. On constate également sur cette figure que la rupture s'est produite à l'interface entre interphase SiO₂ et interphase BN.

### Exemple 5

Un matériau renfort SiC/interphase SiO₂/interphase BN/matrice SiC est obtenu comme dans l'exemple 1 mais avec une interphase lamellaire BH ayant une épaisseur égale à 1 micron. L'essai de traction à température ambiante donne les résultats suivants :
- R_{T}: = 190 MPa
- E: = 180 GPa
- ε_{R}: = 0,5 %.

### Exemple 6

Des strates de tissu SiC sont empilées dans un outillage de façon à obtenir un taux de fibres de 35 %.

Les strates de tissu empilées maintenues dans l'outillage subissent successivement les opérations suivantes :
- dépôt sur chaque fibre élémentaire d'une couche de 1 micron de SiC au sein d'un premier four d'infiltration en phase gazeuse,
- dépôt dans un second four d'infiltration en phase gazeuse d'une couche lamellaire homogène de 1,5 micron de BN qui se superpose à la couche SiC précédente,
- densification par une matrice SiC au sein du premier four d'infiltration en phase gazeuse.

La caractérisation en traction à température ambiante du matériau obtenu donne les résulats suivants :
- R_{T}: = 200 MPa
- E: = 200 GPa
- ε_{R}: = 0,45 %.

La comparaison de ces caractéristiques avec celles du matériau de l'exemple 2 montre l'amélioration apportée par la présence de la couche de SiC déposée sur les fibres et formant interphase de contrôle qui canalise la fissuration.

Le faciès de rupture observé par microscope électronique à balayage (figure 11) montre une décohésion notable entre l'interphase de contrôle SiC et l'interphase lamellaire BN.

### Exemple 7

Des strates de tissu SiC sont placées dans un outillage de façon à obtenir un taux de fibres de 43 %.

Les strates de tissu empilées maintenues dans l'outillage sont placées dans un four d'infiltration en phase gazeuse pour former successivement :
- une couche de pyrocarbone de type laminaire lisse, ou PyC(LL), de 0,5 micron d'épaisseur qui est déposée sur chaque fibre élémentaire,
- une couche de pyrocarbone de type laminaire rugueux PyC(LR) à structure lamellaire, de 0,5 micron d'épaisseur qui se superpose à la couche de PyC(LL).

Ces conditions de dépôt de PyC(LL) et PyC(LR) sont bien connues. Ces deux matériaux se distinguent par leur microstructure. Cette différence se traduit notamment, pour le PyC(LL), comme pour le pyrocarbone de type isotrope PyC(I) par une activité optique inférieure à celle du PyC(LR).

Les strates de tissu revêtues des couches PyC (LL) et PyC(LR) et toujours maintenues dans l'outillage sont ensuite placées dans un four d'infiltration en phase gazeuse pour densification par une matrice SiC.

Un essai en traction du matériau obtenu, à température ambiante, donne les résultats suivants :
- R_{T}: = 180 MPa
- E: = 180 GPa
- ε_{R}: = 0,5 %.

La séquence PyC(LL) - PyC(LR) entre fibre et matrice a été observée par microscopie optique comme le montre la figure 12.

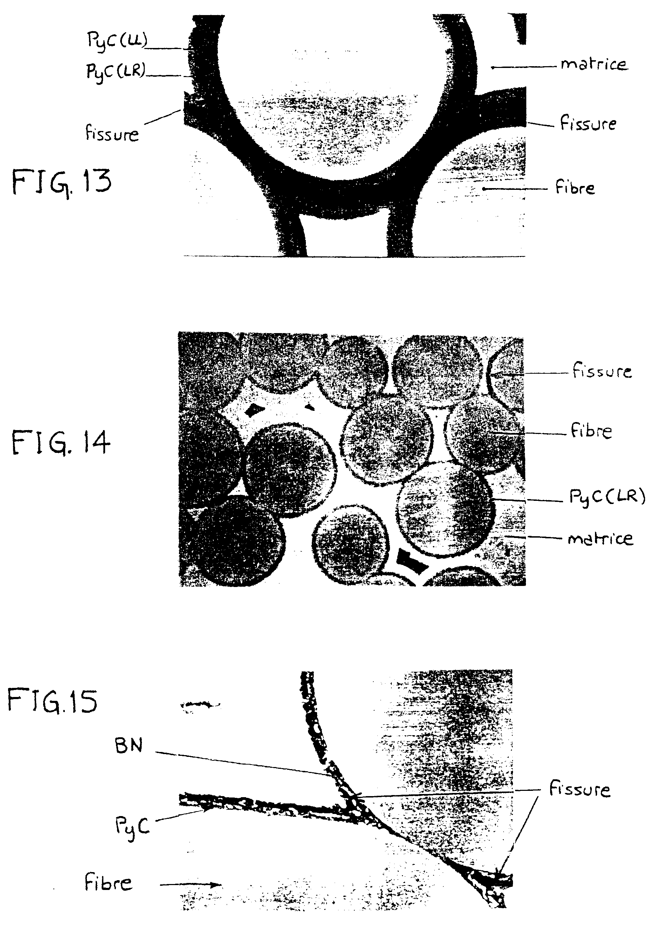

L'observation d'un faciès de rupture par microscopie électronique à balayage (figure 13) montre la localisation de la fissuration à l'interface entre la couche PyC(LL), formant interphase de contrôle, et la couche PyC(LR), formant interphase lamellaire.

### Exemple 8

A titre comparatif, il est procédé comme dans l'exemple 7, mais en formant sur chaque fibre élémentaire une seule couche de PyC(LR) d'épaisseur égale à 1 micron à la place des deux couches PyC(LL) et PyC(LR) d'épaisseurs égales à 0,5 micron.

La caractérisation du matériau obtenu par essai en traction à température ambiante donne les résultats suivants :
- R_{T}: = 180 MPa
- E =: 180 GPa
- ε_{R} =: 0,3 %.

L'observation d'un faciès de rupture au microscope électronique à balayage (figure 14) montre que la fissuration se propage à l'interface entre les fibres SiC et l'interphase lamellaire PyC(LR).

La comparaison entre l'exemple 7 et l'exemple 8 montre l'augmentation de l'allongement à rupture obtenue par la présence de l'interphase de contrôle PyC(LL) qui permet la localisation de la fissuration à l'interface PyC(LL) - PyC(LR). Comme déjà indiqué, cette augmentation signifie une énergie à rupture plus élevée et une meilleure tenue au choc même si, dans cet exemple, R_{T} n'est pas augmentée.

### Exemple 9

Des strates de tissu SiC sont placées dans un outillage, de façon à obtenir un taux de fibres de 40 %, puis introduites dans un four d'infiltration en phase gazeuse pour déposer sur chaque fibre élémentaire, successivement, une couche de PyC de 0,2 micron d'épaisseur et une couche de BN de 0,2 micron d'épaisseur qui se superpose à la couche de PyC. Ensuite, dans le même four, il est procédé à une densification par infiltration en phase gazeuse d'une matrice SiC. L'essai en traction à température ambiante sur le matériau finalement obtenu donne les résultats suivants :
- R_{T}: = 170 MPa
- E: = 200 GPa
- ε_{R}: = 0,48 %.

La comparaison avec l'exemple 8 montre l'amélioration apportée par la combinaison de la couche de PyC formant interphase de contrôle et de la couche de BN formant interphase lamellaire. L'observation d'un faciès de rupture au microscope électronique à balayage (figure 15) montre la localisation de la fissuration à l'interface PyC - BN, la résistance à rupture à cette interface s'avère donc inférieure à celle de la couche de PyC et à celle de l'interface entre fibre et couche de PyC.

### Exemple 10

Des strates de tissu en fibres SiC "Nicalon" de la société japonaise "Nippon Carbon'" sont placées dans un outillage de façon à obtenir un taux de fibres de 43 %.

Les strates empilées maintenues dans l'outillage sont placées dans un four d'infiltration en phase gazeuse pour densification par une matrice SiC.

Lorsque la densification est terminée, le matériau composite SiC/SiC obtenu est traité thermiquement sous argon à une température de 1200 degrés C pendant 10 heures.

L'essai en traction à température ambiante du matériau obtenu donne les résultats suivants :
- R_{T}: = 180 MPa
- E: = 200 GPa
- ε_{R}: = 0,6%.

L'observation de la liaison entre fibre et matrice au microscope électronique à transmission a mis en évidence la présence de la séquence suivante : fibre SiC - couche de carbone mal organisé - couche de SiO₂ amorphe - couche de carbone organisé à structure en feuillets de 0,1 micron d'épaisseur - matrice SiC.

On retrouve donc dans le matériau des interphases multiples formant une séquence du même type que pour le matériau de l'exemple 4, la seule différence étant le remplacement de l'interphase lamellaire BN par une interphase lamellaire constituée par une couche de carbone en feuillets bien organisée générée lors du traitement thermique.

Des essais de choc normalisés ASTM au mouton Charpy ont montré que le matériau possède une résistance au choc supérieure à 4 J/cm², limite de la machine d'essai utilisée, le matériau ne s'étant pas cassé après un, voire plusieurs impacts.

### Exemple 11

Il est procédé comme dans l'exemple 10 à l'exception du traitement thermique du matériau SiC/SiC.

L'essai en traction à température ambiante donne les résultats suivants :
- R_{T}: = 130 MPa
- E: = 200 MPa
- ε_{R}: = 0,1 %.

L'observation de la liaison fibre-matrice au microscope électronique à transmission montre l'existence de la séquence suivante : fibre SiC - couche de carbone mal organisé - couche de SiO₂ amorphe (pas partout) - matrice SiC.

Un essai de choc au mouton Charpy a montré pour le matériau une résistance au choc égale à environ 1,13J/cm².

La comparaison entre les exemples 10 et 11 montre que le traitement thermique effectué sur le composite SiC/SiC entraîne la formation d'une couche régulière de SiO₂ ayant la fonction d'interphase de contrôle et d'une couche régulière de carbone bien organisé en feuillets ayant la fonction d'interphase lamellaire, ce qui confère au matériau une résistance au choc élevée par la localisation de la fissuration à l'interface SiO₂-carbone bien organisé. La couche de carbone mal organisé présente entre la fibre et la couche SiO₂ remplit alors la fonction d'interphase de confinement.

Tous les exemples qui précèdent montrent le rôle de l'interphase de contrôle dans la préservation des fibres vis-à-vis de fissures ayant traversé la matrice et l'interphase lamellaire. Il ressort aussi des observations effectuées que la présence de l'interphase de contrôle se traduit par un cheminement préférentiel des fissures à l'interface entre interphase de contrôle et interphase lamellaire.

## Revendications

1. Matériau composite à texture de renfort en fibres réfractaires et matrice céramique avec une couche formant interphase en un matériau à structure lamellaire située entre les fibres de la texture et la matrice,
caractérisé en ce qu'au moins une couche (14) formant interphase de contrôle est située entre la surface des fibres (10) et l'interphase lamellaire (16) et est en un matériau choisi parmi soit des matériaux ayant une contrainte et/ou un allongement à rupture inférieurs à ceux des fibres (10), soit des matériaux dont l'adhérence à l'interphase lamellaire est suffisamment faible pour que la résistance à rupture de l'interface entre interphase de contrôle et interphase lamellaire soit inférieure à celle de l'interphase de contrôle, de manière à définir, pour des fissures propagées à travers la matrice (18) et l'interphase lamellaire (16), une zone de cheminement préférentiel hors du contact direct avec les fibres-mêmes (10).

2. Matériau composite selon la revendication 1, caractérisé en ce que l'interphase de contrôle (14) est réalisée de manière à offrir une zone de cheminement préférentiel de fissure à l'interface (15) entre interphase de contrôle (14) et interphase lamellaire (16).

3. Matériau composite selon l'une quelconque des revendications 1 et 2, caractérisé en ce que le matériau constitutif de l'interphase de contrôle est choisi parmi des verres, des céramiques et des pyrocarbones à faible activité optique.

4. Matériau composite selon la revendication 3, caractérisé en ce que le matériau constitutif de l'interphase de contrôle est la silice.

5. Matériau composite selon l'une quelconque des revendications 1 à 3, caractérisé en ce que l'épaisseur de l'interphase de contrôle est inférieure à 1 micron.

6. Matériau composite selon l'une quelconque des revendications 1 à 5, caractérisé en ce qu'une couche formant interphase de confinement (12) est située entre la surface des fibres (10) et l'interphase de contrôle (14) pour confiner la zone de cheminement préférentiel d'une fissure ayant traversé la matrice (18) et l'interphase lamellaire (16), entre l'interphase de confinement (12) et l'interphase lamellaire (16).

7. Matériau composite selon la revendication 6, caractérisé en ce que le matériau constitutif de l'interphase de confinement (12) est choisi parmi soit des matériaux ayant une contrainte et un allongement à rupture intermédiaires entre ceux des fibres et ceux du matériau de l'interphase de contrôle,soit des matériaux dont l'adhérence à l'interphase de contrôle est suffisamment faible pour que la résistance à rupture de l'interface entre interphase de confinement et interphase de contrôle soit inférieure à celle de l'interphase de confinement.

8. Matériau composite selon la revendication 7, caractérisé en ce que le matériau constitutif de l'interphase de confinement est du carbone mal organisé.

9. Matériau composite selon la revendication 1, caractérisé en ce que l'on trouve entre les fibres (10) et la matrice (18), et dans cet ordre :
- une première interphase de contrôle (14) en un matériau choisi parmi les verres, les céramiques et les pyrocarbones à faible activité optique, et
- une deuxième interphase (16) en un matériau à structure lamellaire choisi parmi le nitrure de bore, le pyrocarbone de type laminaire rugueux et le carbone organisé en feuillets.

10. Matériau composite selon la revendication 9, caractérisé en ce que les fibres (10) sont essentiellement en carbure de silicium.

11. Matériau composite selon l'une quelconque des revendications 9 et 10, caractérisé en ce que la matrice est en carbure de silicium.

12. Matériau selon l'une quelconque des revendications 9 à 11, caractérisé en ce que la première interphase est en silice.

13. Matériau composite selon l'une quelconque des revendications 9 à 12, caractérisé en ce que l'on trouve une interphase supplémentaire (12) en carbone à l'état mal organisé entre les fibres (10) et la première interphase (14).

## Patentansprüche

1. Verbundmaterial mit einer Verstärkungstextur aus hitzebeständigen Materialien und einer Keramikmatrix mit einer eine Zwischenphase aus einem Material mit Lamellenstruktur bildenden Schicht, die zwischen den Fasern der Textur und der Matrix liegt,
**dadurch** **gekennzeichnet**, daß
wenigstens eine Schicht (14), die eine Steuerzwischenphase bildet, zwischen der Oberfläche der Fasern (10) und der Lamellenzwischenphase (16) liegt und aus einem Material besteht, das entweder aus Materialien ausgewählt ist, die eine Bruchspannung und/oder eine Bruchdehnung haben, die niedriger als die der Fasern (10) ist, oder aus Materialien, deren Adhäsionskraft gegenüber der Lamellenzwischenphase ausreichend gering ist, damit die Bruchfestigkeit der Zwischenschicht zwischen der Steuerzwischenphase und der Lamellenzwischenphase geringer als diejenigen der Steuerzwischenphase ist, um für durch die Matrix (18) und die Lamellenzwischenphase (16) verteilte Risse eine Zone vorzugsweiser Orientierung außer dem direkten Kontakt mit den Fasern (10) selbst zu bilden.

2. Verbundmaterial nach Anspruch 1,
**dadurch** **gekennzeichnet**, daß die Steuerzwischenphase (14) derart hergestellt ist, daß der Zwischenschicht (15) zwischen der Steuerzwischenphase (14) und der Lamellenzwischenphase (16) eine Zone vorzugsweiser Rissorientierung verliehen wird.

3. Verbundmaterial nach einem der Ansprüche 1 und 2,
**dadurch** **gekennzeichnet**, daß
das die Steuerzwischenphase bildende Material aus Glas-, Keramik- und Pyrokohlenstoffmaterialien mit geringer optischer Aktivität ausgewählt ist.

4. Verbundmaterial nach Anspruch 3,
**dadurch** **gekennzeichnet**, daß
das die Steuerzwischenphase bildende Material Siliziumdioxid ist.

5. Verbundmaterial nach einem der Ansprüche 1 - 3,
**dadurch** **gekennzeichnet**, daß
die Dicke der Steuerzwischenphase geringer als ein Mikron ist.

6. Verbundmaterial nach einem der Ansprüche 1 - 5,
**dadurch** **gekennzeichnet**, daß
eine Schicht, die eine Begrenzungszwischenphase (12) bildet, zwischen der Oberfläche der Fasern (10) und der Steuerzwischenphase (14) angeordnet ist, um die Zone bevorzugter Rißorientierung, die die Matrix (18) und die Lamellenzwischenphase (16) durchsetzt hat, zwischen der Begrenzungszwischenphase (12) und der Lamellenzwischenphase (16) zu begrenzen.

7. Verbundmaterial nach Anspruch 6,
**dadurch** **gekennzeichnet**, daß
das die Begrenzungszwischenphase (12) bildende Material entweder aus Materialien , die eine Bruchspannung und eine Bruchdehnung haben, die zwischen denjenigen der Fasern und denjenigen des Materials der Steuerzwischenphase liegen, oder aus Materialien ausgewählt ist, deren Adhäsionskraft gegenüber der Steuerzwischenphase ausreichend gering ist, damit die Bruchfestigkeit der Zwischenschicht zwischen der Begrenzungszwischenphase und der Steuerzwischenphase geringer als diejenige der Begrenzungszwischenphase ist.

8. Verbundmaterial nach Anspruch 7,
**dadurch** **gekennzeichnet**, daß
das die Begrenzungszwischenphase bildende Material aus gering geordnetem Kohlenstoff besteht.

9. Verbundmaterial nach Anspruch 1,
**dadurch** **gekennzeichnet**, daß
sich zwischen den Fasern (10) und der Matrix (18) in dieser Reihenfolge befinden:
- eine erste Steuerzwischenphase (14) aus einem Material, das aus den Glas-, Keramik- und Pyrokohlenstoffen mit geringer optischer Aktivität ausgewählt ist, und
- eine zweite Zwischenphase (16) aus einem Material mit einer Lamellenstruktur, das aus Bornitrid, Pyrokohlenstoff des Lamellentyps mit rauher Oberfläche und in Folien organisiertem Kohlenstoff ausgewählt ist.

10. Verbundmaterial nach Anspruch 9,
**dadurch** **gekennzeichnet**, daß
die Fasern (10) im wesentlichen aus Siliziumcarbid bestehen.

11. Verbundmaterial nach einem der Ansprüche 9 und 10,
**dadurch** **gekennzeichnet**, daß
die Matrix aus Siliziumcarbid besteht.

12. Material nach einem der Ansprüche 9 bis 11,
**dadurch** **gekennzeichnet**, daß
die erste Zwischenphase aus Siliziumdioxid besteht.

13. Verbundmaterial nach einem der Ansprüche 9 bis 12,
**dadurch** **gekennzeichnet**, daß
eine zusätzliche Zwischenphase (12) aus Kohlenstoff im Zustand geringer Organisation zwischen den Fasern (10) und der ersten Zwischenphase (14) vorhanden ist.

## Claims

1. Composite material with reinforcing texture in refractory fibers and ceramic matrix having a layer forming interphase in a material with lamellar structure situated between the fibers of the structure and the matrix,
characterized in that at least one layer (14) forming control interphase is situated between the surface of the fibers (10) and the lamellar interphase (16) and is in a material selected either from materials having a breaking strength and/or elongation at break less than those of the fibers (10), or materials whose bonding strength toward the lamellar interphase is sufficiently low for the breaking strength of the interface between control interphase and lamellar interphase to be lower than that of the control interphase, such as to define, for cracks which have propagated through the matrix (18) and the lamellar interphase (16), a zone of preferential progression away from direct contact with the actual fibers (10).

2. Composite material according to claim 1, characterized in that the control interphase (14) is produced in such a way as to provide a preferential crack-progression zone at the interface (15) between control interphase (14) and lamellar interphase (16).

3. Composite material according to any one of claims 1 and 2, characterized in that the material constituting the control interphase is selected from glass, ceramics and low optical activity pyrolytic carbons.

4. Composite material according to claim 3, characterized in that the material constituting the control interphase is silica.

5. Composite material according to any one of claims 1 to 3, characterized in that the thickness of the control interphase is less than 1 »m.

6. Composite material according to any one of claims 1 to 5, characterized in that a layer forming confining interphase (12) is situated between the surface of the fibers (10) and the control interphase (14) in order to confine the preferential progression zone for a crack having spread through the matrix (18) and the lamellar interphase (16), between the confining interphase (12) and the lamellar interphase (16).

7. Composite material according to claim 6, characterized in that the material constituting the confining interphase (12) is selected either from materials having a breaking strength and elongation at break intermediate between those of the fibers and those of the material of the control interphase, or from materials whose bonding strength toward the control interphase is sufficiently low for the breaking strength of the interface between confining interphase and control interphase to be lower than that of the confining interphase.

8. Composite material according to claim 7, characterized in that the material constituting the confining interphase is non-organized carbon.

9. Composite material according to claim 1, characterized in that there are provided, between the fibers (10) and the matrix (18), and in the stated order :
- a first control interphase (14) in a material selected from glass, ceramics and low-optical activity pyrolytic carbon, and
- a second interphase (16) in a material with lamellar structure selected from boron nitride, pyrolytic carbon of rough laminar type and carbon organized in lamellae,

10. Composite material according to claim 9, characterized in that the fibers (10) are essentially in silicon carbide.

11. Composite material according to any one of claims 9 and 10, characterized in that the matrix is in silicon carbide.

12. Material according to any one of claims 9 to 11, characterized in that the first interphase is in silica.

13. Composite material according to any one of claims 9 to 12, characterized in that an extra interphase (12) in carbon in non-organized form is provided between the fibers (10) and the first interphase (14).
